# EUROPEAN PATENT APPLICATION

(11) **EP 4 651 272 A1**
(43) Date of publication of application: **19.11.2025**
(21) Application number: 24843373.2
(22) Date of filing: 03.07.2024
(51) Int. Cl.: H01M 10/6551, H01M 10/613, H01M 10/658, H01M 50/224, H01M 50/211

(54) **BATTERY MODULE, BATTERY PACK, AND DEVICE INCLUDING SAME**

(30) Priority: 14.07.2023 KR 20230091885
(71) Applicant: LG Energy Solution, Ltd., Seoul 07335 (KR)
(72) Inventor: PARK, Jinsoo, Daejeon 34122 (KR)
(74) Representative: Plasseraud IP
(86) International application number: PCT/KR2024/009344
(87) International publication number: WO 2025/018653

(57) **Abstract**

The present disclosure includes a battery module and a battery pack including the same, and a battery module according to an embodiment of the present disclosure includes: a battery cell stack in which multiple battery cells are stacked; and a module frame that houses the battery cell stack, wherein a bottom part of the module frame comprises a plurality of holes, and wherein a filling member may be provided in the plurality of holes.

## Description

### [TECHNICAL FIELD]

### Cross Citation with Related Application(s)

This application claims prior to or benefit of Korean Patent Application No. 10-2023-0091885 filed on July 14, 2023 with the Korean Intellectual Property Office, the disclosure of which is incorporated herein by reference in its entirety.

The present disclosure relates to a battery module, a battery pack and a device including the same, and more particularly, to a battery module having an improved cooling performance, and a battery pack and a device including the same.

### [BACKGROUND]

With technology development of mobile devices, and an increase in demand therefor, demand for secondary batteries as energy sources has been rapidly increasing. A lot of researches on secondary batteries capable of meeting various needs have been carried out accordingly.

A secondary battery has attracted considerable attention as an energy source for power-driven devices, such as an electric bicycle, an electric vehicle, and a hybrid electric vehicle, as well as an energy source for mobile devices, such as a mobile phone, a digital camera, and a laptop computer.

Recently, along with a continuous rise of the necessity for a large-capacity secondary battery structure, including the utilization of the secondary battery as an energy storage source, there is a growing demand for a battery pack of a multi-module structure which is an assembly of battery modules in which a plurality of secondary batteries are connected in series/parallel.

Meanwhile, when a plurality of battery cells are connected in series or in parallel to configure a battery pack, it is common to configure a battery module composed of at least one battery cell first and then configure a battery pack by using at least one battery module and adding other components. Since battery cells constituting such a medium- or large-sized battery module are composed of secondary batteries which can be charged and discharged, such a high-output large-capacity secondary battery generates a large amount of heat in a charge and discharge process.

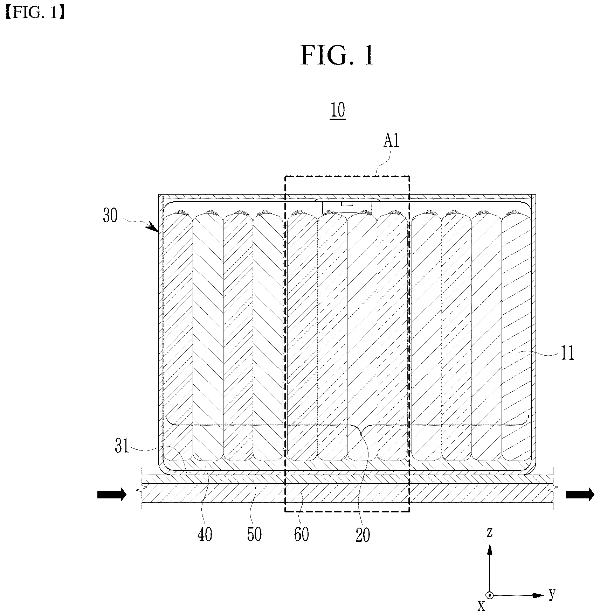

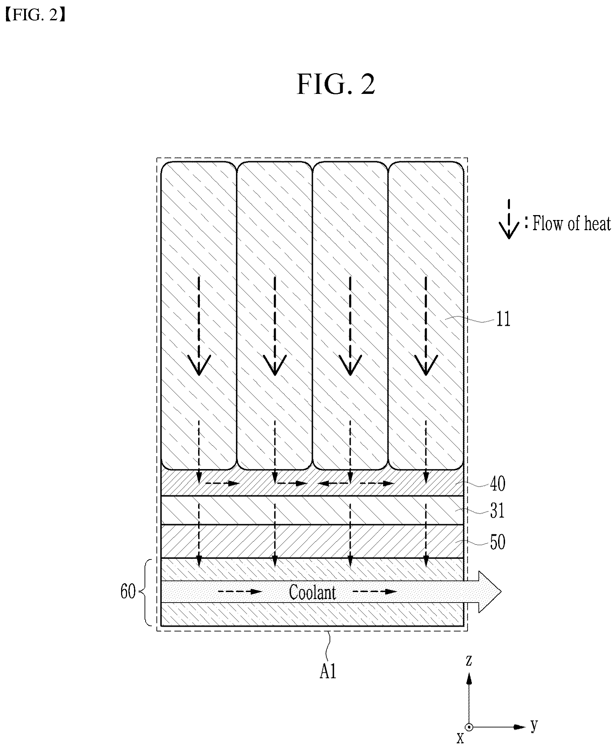

FIG. 1 is a cross-sectional view illustrating a conventional battery module. FIG. 2 is an enlarged view illustrating area A1 in FIG. 1.

Referring to FIGS. 1 and 2, the conventional battery module 10 has a structure in which a plurality of battery cells 11 are stacked to form a battery cell stack 20, and the battery cell stack 20 is housed in a module frame 30.

As mentioned previously, since the conventional battery module 10 includes a plurality of battery cells 11, it generates a large amount of heat in a charge and discharge process. As a cooling means, the battery module 10 may include a thermally conductive resin layer 40 located between the battery cell stack 20 and the bottom part 31 of the module frame 30.

Furthermore, when the battery module 10 is mounted on the pack frame to form a battery pack, a heat transfer member 50 and a heat sink 60 may be sequentially located under the battery module 10. In this case, the heat transfer member 50 may be a heat dissipation pad, and the heat sink 60 may have a coolant flow path formed inside.

Referring to FIGS. 1 and 2, the heat generated from the battery cell 11 passes through the thermally conductive resin layer 40, the bottom part 31 of the module frame 30, the heat transfer member 50, and the heat sink 60 in sequence along a direction toward the heat sink 60, and is transferred to the outside of the battery module 10. However, in the conventional battery module 10, when the heat generated from the battery cell 11 passes through the bottom part 31 of the module frame 30, it can move not only in the z-axis direction toward the heat sink 60, but also in the x-axis direction and the y-axis direction. In other words, the heat generated from the battery cell 11 can move not only in the direction toward the heat sink 60 from the bottom part 31 of the module frame 30, but also in the direction parallel to the bottom part 31 of the module frame 30.

Consequently, the cooling efficiency of the battery may be reduced, and if a thermal runaway phenomenon occurs in one battery cell 11, the propagation of heat is accelerated to adjacent battery cells 11 along the bottom part 31 of the module frame 30, which may cause a problem that the safety of the battery is reduced.

Therefore, in the trend to continuously require the safety for battery modules and battery packs, there is a substantial need to develop a battery module that can satisfy these various requirements while increasing cooling performance.

### [DETAILED DESCRIPTION OF THE INVENTION]

### [Technical Problem]

It is an object of the present disclosure to provide a battery module, a battery pack and a device including the same, having improved safety and cooling efficiency.

However, the technical object of the present disclosure is not limited to the aforementioned one, and may be extended in various ways within the scope of the technical idea included in the present disclosure.

### [Technical Solution]

According to an embodiment of the present disclosure, there is provided a battery module comprising: a battery cell stack in which multiple battery cells are stacked; and a module frame that houses the battery cell stack, wherein a bottom part of the module frame comprises a plurality of holes, and wherein a filling member is provided in the plurality of holes.

The module frame and the filling member may be formed of dissimilar materials.

The module frame may comprise a material having a lower thermal conductivity than the filling member, and the filling member may comprise a material having a higher thermal conductivity than the module frame.

The module frame may comprise SUS or steel, and the filling member may comprise copper(Cu) or aluminum(Al).

The plurality of holes may be formed to penetrate the bottom part in the height direction of the battery cell.

The battery module according to another embodiment of the present disclosure may further comprise a heat insulating member located between the plurality of holes and the filling member.

The heat insulating member may be located while being in contact with the plurality of holes and the filling member.

The heat insulating member may have a ring shape.

The heat insulating member may comprise a heat insulating material.

The heat insulating member may comprise a plastic material including polyethylene (PE) or polypropylene(PP) or a rubber material.

According to another embodiment of the present disclosure, there is provided a battery pack comprising: the battery module mentioned above; and a heat sink located while being in contact with the bottom part of the battery module.

In this case, the heat generated from the battery cell may be discharged to the outside while moving sequentially from the battery cell to the filling member and the heat sink.

The heat generated from the battery cell may be discharged to the outside while moving in a first direction which is a direction perpendicular to the bottom part.

A thermally conductive resin layer may be provided between the battery cell stack and the bottom part of the module frame, and a heat transfer member may be provided between the bottom part of the module frame and the heat sink.

The heat generated from the battery cell may be discharged to the outside while sequentially moving from the battery cell to the thermally conductive resin layer, the filling member, the heat transfer member, and the heat sink.

### [Advantageous Effects]

According to embodiments, the cooling performance of the battery module can be improved, and when a thermal runaway phenomenon occurs in one battery cell, the propagation of heat to adjacent battery cells can be reduced, thereby improving the safety of the battery.

Effects of the present disclosure are not limited to the effects mentioned above, and additional other effects not mentioned herein will be clearly understood from the description of the appended claims by those skilled in the art.

### [BRIEF DESCRIPTION OF THE DRAWINGS]

FIG. 1 is a cross-sectional view illustrating a conventional battery module.
FIG. 2 is an enlarged view illustrating area A1 in FIG. 1.
FIG. 3 is a perspective view of a battery module according to an embodiment of the present disclosure.
FIG. 4 is an exploded perspective view of a battery module according to an embodiment of the present disclosure and a heat sink located at a lower part of the battery module.
FIG. 5 is a perspective view of FIG. 3 as viewed from the -z-axis direction.
FIG. 6 is a cross-sectional view along line B-B' of FIG. 3.
FIG. 7 is an enlarged view illustrating area A2 of FIG. 6.
FIG. 8 is a top view illustrating a bottom part according to another embodiment of the present disclosure.

### [DETAILED DESCRIPTION OF THE EMBODIMENTS]

Hereinafter, various embodiments of the present disclosure will be described in detail with reference to the accompanying drawings, so that those skilled in the art can easily carry out them. The present disclosure may be implemented in various different ways, and is not limited to the embodiments set forth herein.

In order to clearly describe the present disclosure, descriptions of parts unrelated to the description of the present disclosure will be omitted, and the same or similar components throughout the description will be denoted with the same reference numerals.

Since the drawings arbitrarily illustrate the dimension and thickness of each component for the convenience of description, the present disclosure is not necessarily limited to that illustrated. The drawings depict the thickness in an enlarged scale to clearly show different layers and regions. Further, the drawings exaggerate the thickness of a certain layer or region to facilitate the description thereof.

When a layer, film, region, plate or the like is disposed "on" a specific part, the description includes not only a case where the layer, film, region, plate or the like is disposed "directly on" the specific part, but also a case where the layer, film, region, plate or the like is disposed on the specific part via another part. When a part is disposed "directly on" another part, this indicates that no new component is present between the two parts. Further, when a component is disposed "on" a reference part, this indicates that the component is present at the top of or under the reference part, and does not necessarily indicate that the component is disposed only at the top of the reference part, which is opposite to the direction of gravity.

Further, throughout the description, when a portion is referred to as "including" or "comprising" a certain component, it means that the portion can further include other components, without excluding the other components, unless otherwise stated.

Further, throughout the description, when referred to as "planar", it means when a target portion is viewed from the upper side, and when it is referred to as "cross-sectional", it means when a target portion is viewed from the side of a cross section cut vertically.

Further, terms such as first, second, etc. used herein may be used to describe various components, but the components should not be limited by the terms. The terms are used only for the purpose of distinguishing one component from another component.

Further, in this application, the upper part and the lower part may be defined as meaning the z-axis direction and the -z-axis direction, the side surface as meaning the y-axis direction and the -y-axis direction, and the front surface and the rear surface as meaning the x-axis direction and the -x-axis direction, respectively. However, these names are arbitrarily defined within the specification for convenience, and the scope of rights is not limited thereto.

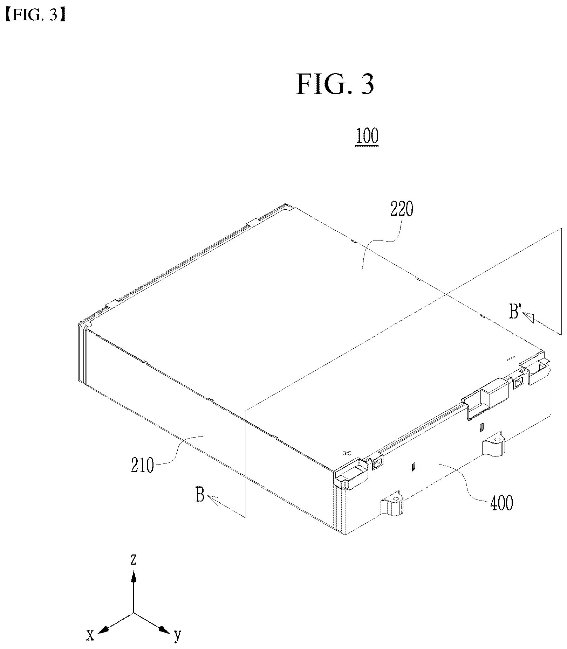

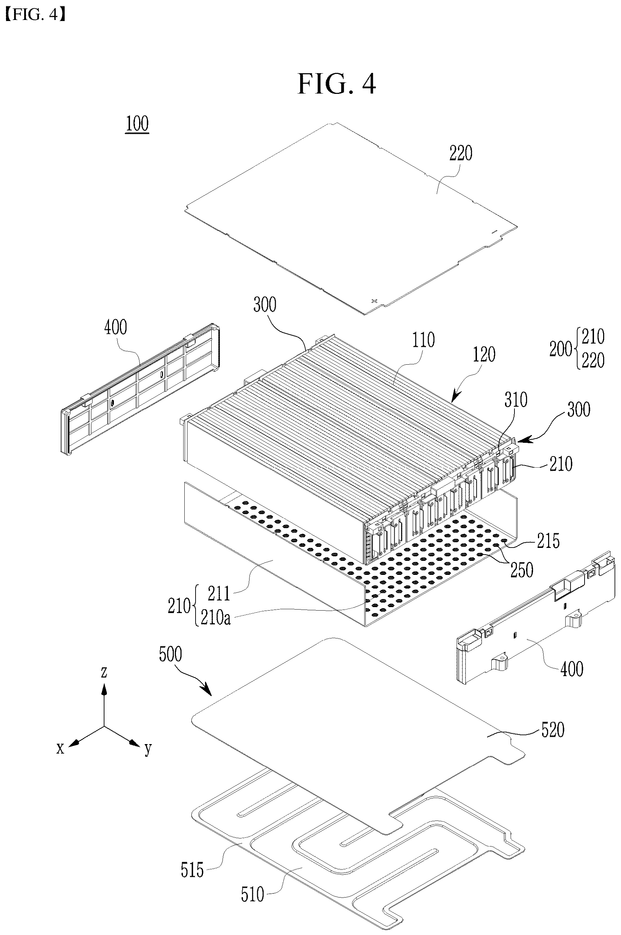

FIG. 3 is a perspective view of a battery module according to an embodiment of the present disclosure. FIG. 4 is an exploded perspective view of a battery module according to an embodiment of the present disclosure and a heat sink located at a lower part of the battery module.

Referring to FIGS. 3 and 4, a battery module 100 according to an embodiment of the present disclosure comprises: a battery cell stack 120 in which a plurality of battery cells 110 are stacked, a module frame 200 that houses the battery cell stack 120, busbar assemblies 300 located on the front surface (y-axis direction) and/or the rear surface (-y-axis direction) of the battery cell stack 120, and end plates400 that cover the front surface (y-axis direction) and/or the rear surface (-y-axis direction) of the battery cell stack 120.

First, the battery cell 110 may be a pouch-type battery cell. Such a pouch-type battery cell may be formed by housing an electrode assembly in a pouch case made of a laminate sheet including a resin layer and a metal layer, and then heat-fusing a sealing part of the pouch case. In this case, the battery cell 110 may be formed in a rectangular sheet-like structure.

Such battery cells 110 may be configured by a plurality of cells, and the plurality of battery cells 110 are stacked so as to be electrically connected to each other, thereby forming a battery cell stack 120. In particular, as shown in FIG. 4, a plurality of battery cells 110 may be stacked along a direction parallel to the x-axis.

The module frame 200 that houses the battery cell stack 120 may include a U-shaped frame 210 and an upper cover 220.

The U-shaped frame 210 may include a bottom part 210a and two side surface parts 211 extending upward from both ends of the bottom part 210a. The bottom part 210a may cover the lower surface (-z-axis direction) of the battery cell stack 120, and the side surface parts 211 may cover both side surfaces (x-axis direction and -x-axis direction) of the battery cell stack 120.

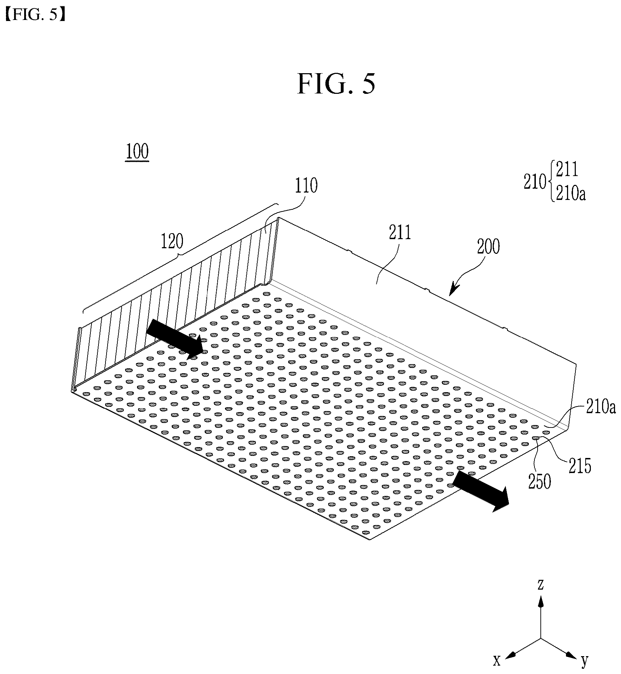

The bottom part 210a may include a plurality of holes 215 that penetrate through the bottom part 210a in the up-down direction (z-axis direction and -z-axis direction). A filling member 250 may be located in the plurality of holes 215. More specific details regarding the filling member 250 will be described later in FIG. 5.

The upper cover 220 may be formed in a single plate-like structure that encases the remaining upper surface (z-axis direction) except for the lower surface and both side surfaces that are encased by the U-shaped frame 210. The upper cover 220 and the U-shaped frame 210 may be coupled by welding or the like in a state where the corresponding corner parts are in contact with each other, thereby forming a structure that covers the battery cell stack 120 in upper, lower, left and right directions. Therefore, the battery cell stack 120 may be physically protected via the upper cover 220 and the U-shaped frame 210. For this purpose, the upper cover 220 and the U-shaped frame 210 may include a metal material having a predetermined strength.

Meanwhile, although not specifically illustrated in the figure, the module frame 200 according to a modified embodiment may be a mono frame in the form of a metal plate material in which the upper surface, lower surface, and both side surfaces are integrated. That is, this is not a structure in which the U-shaped frame 210 and the upper cover 220 are coupled to each other, but may be a structure that is produced by extrusion molding so that the upper surface, lower surface, and both side surfaces are integrated. Furthermore, the structure of the module frame 200 may be provided as an L-shaped frame structure in addition to the mono frame or U-shaped frame, and may be provided as various structures not described in the above embodiments.

The busbar assembly 300 may be located on one surface of the battery cell stack 120 to thereby cover one surface of the battery cell stack 120 and also guide connection between the battery cell stack 120 and an external device. Specifically, the busbar assembly 300 may be located on the front surface (y-axis direction) or the rear surface (-y-axis direction) of the battery cell stack 120.

The busbar assembly 300 includes a busbar frame 310 and a busbar 320 mounted on one surface of the busbar frame 310. In this case, the busbar frame 310 may include an electrically insulating material. The busbar frame 310 can limit the busbar 320 from contacting other portions of the battery cells 110 other than the portion joined with the electrode lead protruding from the battery cell 110, and can prevent an electrical short circuit from occurring.

The end plate 400 can hermetically seal an open surface of the module frame 200 to thereby protect the battery cell stack 120 and electrical components connected thereto from external physical impacts. For this purpose, the end plate 400 may be made from a material having a predetermined strength. For example, the end plate 400 may include a metal such as aluminum.

Specifically, the end plate 400 can be coupled (joined, sealed, or hermetically sealed) with the module frame 200 while covering the busbar assembly 300 located on one surface of the battery cell stack 120. That is, each corner of the end plate 400 can be coupled to a corresponding corner of the module frame 200 by a method such as welding. In addition, although not illustrated in the figure, an insulating cover for electrical insulation may be further located between the end plate 400 and the busbar assembly 300.

The heat sink 500 is located under the bottom part 210a of the module frame 200, and may include a lower heat sink 510 and an upper heat sink 520 that are stacked and located on the lower heat sink 510.

In this case, the lower heat sink 510 includes a protrusion part 515 protruding toward the upper heat sink 520, wherein the protrusion part 515 may be located by being joined to the upper heat sink 520 by a method such as welding. In this case, the space between the lower heat sink 510 and the upper heat sink 520 may be a flow path through which a coolant flows. The upper heat sink 520 may be located facing the bottom part 210a of the module frame 200.

The heat sink 500 may be made of aluminum(Al), and may include a flow path through which a coolant may move. However, the present disclosure is not limited thereto, and can be applied to any form that contains a material having cooling performance capable of sufficiently cooling the heat generated from the battery module 100.

In this figure, the heat sink 500 is depicted in a configuration that is located individually or independently, but is not limited thereto. As an example, the heat sink 500 may also be configured to be integrated with the battery module 100. Specifically, the bottom part 210a of the module frame 200 constitutes the upper plate of the lower heat sink 510, and the protrusion part 515 of the lower heat sink 510 and the bottom part 210a are located while being in contact with each other, thereby forming a coolant flow path.

Next, the characteristics of the bottom part 210a of the module frame 200 and the filling member 250 according to an embodiment of the present disclosure and the relationship therebetween will be described in more detail.

FIG. 5 is a perspective view of FIG. 3 as viewed from the -z-axis direction.

Referring to FIG. 5, the bottom part 210a of the U-shaped frame 210 according to an embodiment of the present disclosure may be provided with a plurality of holes 215 and a filling member 250 filled in the holes 215.

Specifically, the bottom part 210a of the U-shaped frame 210 may be provided with a plurality of holes 215 penetrating through the bottom part 210a. More specifically, the plurality of holes 215 may be provided while penetrating through the bottom part 210a in the height direction (z-axis direction and -z-axis direction) of the battery cell 110. In this case, the plurality of holes 215 may be located in a state where they are filled with a filling member 250.

The filling member 250 may be filled and located in a plurality of holes 215.

In this case, the module frame 200 and the filling member 250 may be formed of dissimilar materials. Specifically, the module frame 200 and the filling member 250 may be made of dissimilar metals. More specifically, the filling member 250 may include a material having a higher thermal conductivity than the module frame 200 of the present disclosure.

In other words, the module frame 200 according to the present disclosure may include a material having a lower thermal conductivity than the material constituting a conventional module frame, and may include a material having a lower thermal conductivity than the filling member 250. In contrast, the filling member 250 may include a material having a higher thermal conductivity than the module frame 200.

For example, the module frame 200 according to the present disclosure may include a material such as SUS or steel. Consequently, the module frame 200 according to the present disclosure may include a material which is high in rigidity and thus high in structural safety but does not easily transfer heat. In contrast, the filling member 250 may include a material having a higher thermal conductivity than the module frame 200, that is, a metal having high thermal conductivity. For example, the filling member 250 may include a metal having high thermal conductivity, such as copper(Cu), aluminum(Al), etc.

When comparing the exemplary materials listed above, the module frame 200 may include a material having a thermal conductivity of about 20 W/mK, and the filling member 250 may include a material having a thermal conductivity of 200 W/mK or more.

When heat is generated from the battery cell 110 and moves to the bottom part 210a, due to the difference in material and thermal conductivity between the module frame 200 and the filling member 250, the heat may move in the height direction (z-axis direction) of the bottom part 210a rather than moving in the width direction (x-axis direction) and length direction (y-axis direction) of the bottom part 210a. That is, when the heat generated from the battery cell 110 moves to the bottom part 210a, the movement in the xy plane of the bottom part 210a where adjacent battery cells 110 are located is reduced, and the movement in the z-axis direction in contact with the heat sink can be more promoted.

Therefore, heat generated from one battery cell 110 can be prevented from moving to adjacent other battery cells 110 along the bottom part 210a of the module frame 200, thereby reducing the propagation of heat and improving the safety of the battery.

In addition, since heat generated from one battery cell 110 can easily move in the vertical direction (z-axis direction), it moves to the heat sink 500 in contact with the bottom part 210a of the U-shaped frame 210, thereby improving the cooling performance of the battery.

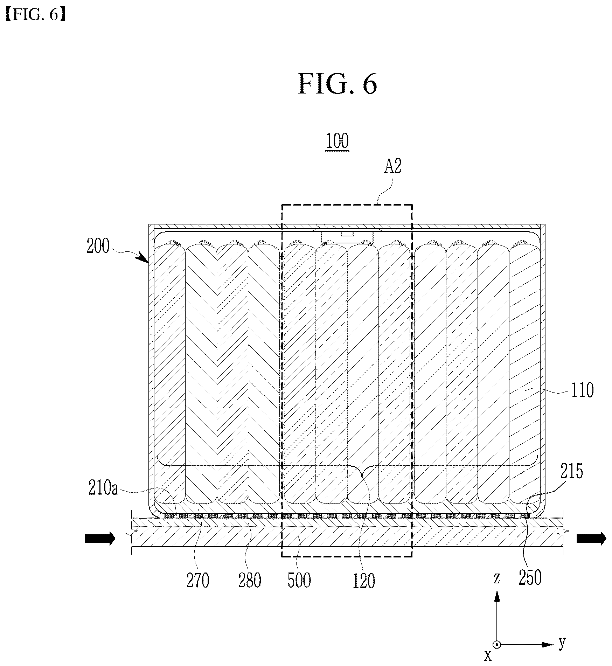

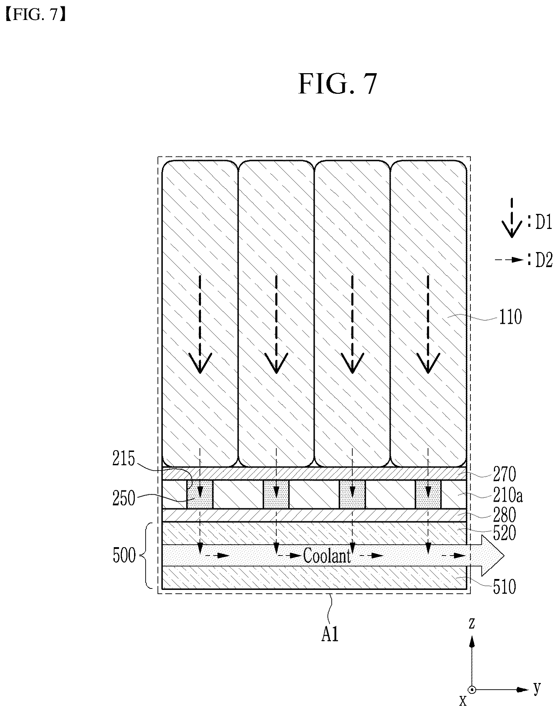

FIG. 6 is a cross-sectional view along line B-B' of FIG. 3. FIG. 7 is an enlarged view illustrating area A2 of FIG. 6.

Referring to FIGS. 6 and 7, a battery module 100 according to an embodiment of the present disclosure may be mounted and located on a heat sink 500 constituting a battery pack.

In the battery module 100, a thermally conductive resin layer 270 may be provided between the battery cell stack 120 in which a plurality of battery cells 110 are stacked and the bottom part 210a of the module frame 200. The thermally conductive resin layer 270 may be a thermal resin, and may fix and adhere the module frame 200 and the battery cell stack 120. In addition, due to the thermally conductive resin layer 270, heat generated from the battery cells 110 may be transferred to the bottom part 210a of the module frame 200.

The battery module 100 may have a structure in which the bottom part 210a is mounted facing the heat sink 500. In this case, the battery module 100 can be mounted on the heat sink 500 via the heat transfer member 280. That is, the heat transfer member 280 can be located while being in contact with one surface of the module frame 200 and one surface of the heat sink 500. Specifically, the heat transfer member 280 can be located while being in contact with the bottom part 210a of the module frame 200 and one surface of the heat sink 500, so that heat generated from the battery cell 110 can be transferred to the outside via the heat sink 500.

Looking more closely at the heat flow in FIG. 7, the heat generated from the battery cell 110 can move toward the heat sink 500. In detail, the heat generated from the battery cell 110 can be discharged to the outside while moving sequentially to the filling member 250 and the heat sink 500. More specifically, the heat generated from the battery cell 110 can move to the bottom part 210a of the module frame via the thermally conductive resin layer 270. In this case, the heat generated from the battery cell 110 can move to the heat sink 500 via the filling member 250 which has a higher thermal conductivity than the bottom part 210a of the module frame. That is, the heat generated from the battery cell 110 can move in the first direction D1, which is a vertical direction (z-axis direction) with respect to the bottom part 210a via the filling member 250, and may not move in the horizontal direction (x-axis direction or y-axis direction) via the bottom part 210a of the module frame.

The heat that has passed through the filling member 250 can then be transferred to the heat sink 500 via the heat transfer member 280. The heat that has reached the heat sink 500 can be discharged to the outside while moving in the second direction (D2), which is the direction of movement of the coolant, along the coolant flowing through the flow path formed in the heat sink 500.

In summary, the heat generated from the battery cell 110 can be discharged to the outside while sequentially moving from the battery cell 110 to the thermally conductive resin layer 270, the filling member 250, the heat transfer member 280, and the heat sink 500.

That is, the heat generated from the battery cell 110 moves in the first direction D1 along the filling member 250 which has relatively higher thermal conductivity than the bottom part 210a of the module frame. In this case, the heat generated from the battery cell 110 can move only in the first direction D1 rather than in the second direction D2 within the module frame 200 due to the difference in materials and thermal conductivity between the module frame 200 and the filling member 250. That is, the filling member 250 is located in the plurality of holes 215 provided in the bottom part 210a of the module frame, so that the heat generated from one battery cell 110 can be prevented from moving to adjacent other battery cells 110 along the bottom part 210a of the module frame 200. Therefore, it is possible to reduce the propagation of heat through the module frame and improve the safety of the battery.

Further, since the heat generated from one battery cell 110 moves more easily in the first direction D1, which is a vertical direction, than in the second direction D2, which is a horizontal direction, it may be easier to move to the heat sink 500 in contact with the bottom part 210a of the module frame and then discharge to the outside compared to the conventional case. Therefore, the cooling performance of the battery may be improved.

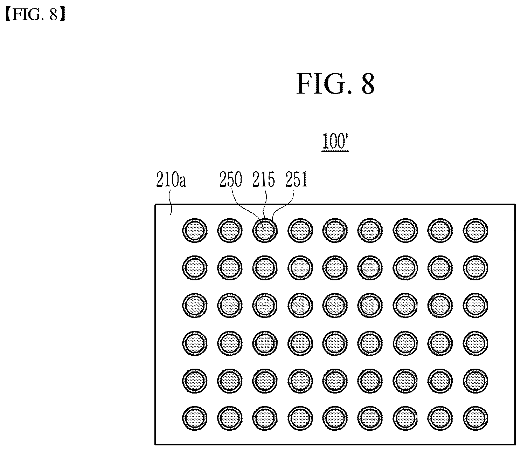

FIG. 8 is a top view illustrating a bottom part according to another embodiment of the present disclosure.

Since the contents described in FIG. 8 corresponds to a modified embodiment of the present disclosure, the description of the same contents as those described above will be omitted.

Referring to FIG. 8, the bottom part 210a of the module frame constituting the battery module 100' according to another embodiment of the present disclosure may further include a heat insulating member 251 in addition to a plurality of holes 215 and a filling member 250.

The heat insulating member 251 may be located between the plurality of holes 215 and the filling member 250. In this case, the outer peripheral surface of the heat insulating member 251 may be located while being in contact with the holes 215 and the filling member 250. Specifically, one surface of the heat insulating member 251 may be in contact with the plurality of holes 215, and the other surface of the heat insulating member 251 may be in contact with the filling member 250. At this time, one surface of the heat insulating member 251 in contact with the hole 215 may be defined as the outer surface of the heat insulating member 251, and one surface of the heat insulating member 251 in contact with the filling member 250 may be defined as the inner surface of the heat insulating member 251. The heat insulating member 251 may be a ring shape that is in contact with a plurality of holes 215 and the filling member 250.

The heat insulating member 251 may include a heat insulating material. Furthermore, the heat insulating member 251 may also include an electric insulating material. For example, the heat insulating member 251 may include a plastic material such as polyethylene(PE), polypropylene(PP), or a rubber material.

This heat insulating member 251 is located between the bottom part 210a having a plurality of holes 215 and the filling member 250, thereby capable of improving the heat insulating and electric insulating performance between them. Specifically, when heat generated from the battery cell is transferred to the bottom part 210a and the filling member 250, the heat insulating member 251 allows heat to move only in the vertical direction (z-axis direction) of the bottom part 210a and the filling member 250 and can prevent heat from moving in the surface direction (xy plane). That is, the heat insulating member 251 may include a heat insulating material, which prevents the heat from moving in the surface direction of the bottom part 210a and the filling member 250 and promotes movement in the vertical direction.

In summary, the battery module 100' according to another embodiment of the present disclosure further includes a heat insulating member 251, which may make it easier for heat generated from the battery cells to move vertically along the filling member 250 having a relatively high thermal conductivity compared to the bottom part 210a. Therefore, the heat generated from the battery cell can be easily discharged to the outside along the heat sink, thereby improving the cooling performance and safety compared to a conventional battery module.

The above-mentioned battery module and a battery pack comprising the same can be applied to various devices. Such devices can be applied to a vehicle means such as an electric bicycle, an electric vehicle, or a hybrid vehicle, but the present disclosure is not limited thereto, and is applicable to various devices that can use a battery module and a battery pack comprising the same, which is also falls under the scope of the present disclosure.

Although the invention has been described in detail above with reference to preferred embodiments thereof, it will be appreciated by those skilled in the art that the scope of the present disclosure is not limited thereto, and various modifications and improvements can be made in these embodiment without departing from the principles and sprit of the invention, the scope of which is defined in the appended claims and their equivalents.

### [Description of Symbols]

100, 100': battery module
110: battery cell
120: battery cell stack
200: module frame
210: U-shaped frame
210a: bottom part
215: hole
220: upper cover
250: filling member
251: heat insulating member
270: thermally conductive resin layer
280: heat transfer member
300: busbar assembly
400: end plate
500: heat sink

## Claims

1. A battery module comprising:
a battery cell stack in which multiple battery cells are stacked; and
a module frame that houses the battery cell stack,
wherein a bottom part of the module frame comprises a plurality of holes, and
wherein a filling member is provided in the plurality of holes.

2. The battery module of claim 1, wherein:
the module frame and the filling member are formed of dissimilar materials.

3. The battery module of claim 2, wherein:
the module frame comprises a material having a lower thermal conductivity than the filling member, and
the filling member comprises a material having a higher thermal conductivity than the module frame.

4. The battery module of claim 2, wherein:
the module frame comprises SUS or steel, and
the filling member comprises copper(Cu) or aluminum(Al).

5. The battery module of claim 1, wherein:
the plurality of holes are formed to penetrate the bottom part in the height direction of the battery cell.

6. The battery module of claim 1,
further comprising a heat insulating member located between the plurality of holes and the filling member.

7. The battery module of claim 6, wherein:
the heat insulating member is located while being in contact with the plurality of holes and the filling member.

8. The battery module of claim 6, wherein:
the heat insulating member has a ring shape.

9. The battery module of claim 6, wherein:
the heat insulating member comprises a heat insulating material.

10. The battery module of claim 9, wherein:
the heat insulating member comprises a plastic material including polyethylene(PE) or polypropylene(PP) or a rubber material.

11. A battery pack comprising:
the battery module of claim 1; and
a heat sink located while being in contact with the bottom part of the battery module.

12. The battery pack of claim 11, wherein:
the heat generated from the battery cell is discharged to the outside while moving sequentially from the battery cell to the filling member and the heat sink.

13. The battery pack of claim 12, wherein:
the heat generated from the battery cell is discharged to the outside while moving in a first direction which is a direction perpendicular to the bottom part.

14. The battery pack of claim 11, wherein:
a thermally conductive resin layer is provided between the battery cell stack and the bottom part of the module frame, and
a heat transfer member is provided between the bottom part of the module frame and the heat sink.

15. The battery pack of claim 14, wherein:
the heat generated from the battery cell is discharged to the outside while sequentially moving from the battery cell to the thermally conductive resin layer, the filling member, the heat transfer member, and the heat sink.
